# EUROPÄISCHE PATENTANMELDUNG

(11) **EP 1 715 114 A2**
(43) Veröffentlichungstag der Anmeldung: **25.10.2006**
(21) Anmeldenummer: 06405171.7
(22) Anmeldetag: 20.04.2006
(51) Int. Cl.: E04C 2/12, E04C 2/14

(54) **Massivholz-Bauelement**

(30) Priorität: 20.04.2005 CH 7002005
(71) Anmelder: Walch AG, 9492 Eschen (LI)
(72) Erfinder: Walch, Christian, 6714 Nüziders (DE)
(74) Vertreter: Walder, Martin Bernhard

(57) **Zusammenfassung**

Die Erfindung betrifft Holzbretter (11), Brettstapelelemente und Verfahren zum Durchbohren solcher Brettstapel. Jedes Holzbrett (11) besitzt eine erste in Faser- und Längsrichtung des Holzbrettes (11) gerichteten Profilierung mit Nuten (17) und Kämmen (19) in der ersten Breitseite (13) und parallel dazu eine zweite Profilierung mit Nuten (17) und Kämmen (19) in der zweiten Breitseite (14). Jeweils eine Nut (17) einer bestimmten Breite in einer Breitseite (13 oder 14) liegt einem auf der gegenüberliegenden Breitseite (14 oder 13) ausgebildet Kamm (19) derselben Breite gegenüber. Zur Definition einer einheitlichen Fugenweite sind am Grund wenigstens zweier Nuten auf einer Breitseite Distanzrippen ausgebildet, die partiell abgetragen sind. Ein Stapel aus solchen mit Nut und Kamm ineinander greifenden Holzbrettern ist an mehreren Stellen über die gesamte Wandhöhe senkrecht zu den Breitseiten (13,14) der Holzbretter (11) von einem gegebenenfalls tragenden Hartholzstab (41) durchdrungen. Jedes Brett ist gesondert am Stab fixiert und kann daher schwinden und quellen ohne dadurch die Abmessungen des gesamten Brettstapels zu beeinflussen. Zum Bohren werden Tiefenlochbohrer verwendet, bei welchen Druckluft durch den Bohrkopf eingeblasen und Späne und Luft durch einen rohrförmigen Schaft abgesogen werden.

## Beschreibung

Die Erfindung betrifft ein zur Herstellung eines Wand- oder Deckenelements geeignetes Holzbrett, ein Verfahren zur Herstellung eines Wand- oder Deckenelements aus einer Mehrzahl von Holzbrettern, sowie einen Bohrer zur Herstellung eines solchen Wand- oder Deckenelements und ein Bohrverfahren, und ein Wandelement bzw. ein Deckenelement hergestellt aus einer Mehrzahl von Holzbrettern.

In herkömmlicher Strickbauweise werden Balken hochkant gestellt übereinander geschichtet. Diese Balken können mit konischer Nut und entsprechendem Kamm, die auf ihren Schmalseiten ausgebildet sind, ineinander eingreifend ausgebildet sein. Sie bilden mit Ihren Breitseiten die Oberflächen der gestrickten Wand. Solche Wände müssen, um den Anforderungen an einen vorgeschriebenen, maximalen Wärmedurchlass zu genügen, zusätzlich isoliert werden. Solche Wände sind zudem einer erheblichen Setzung ausgesetzt, da die gesamten Lasten eines so gebauten Gebäudes quer zur Faserrichtung des tragenden Holzes abgetragen werden.

Nachteilig an den Vollholz-Wandkonstruktionen aus übereinander gestapelten Balkenlagen ist auch, dass das Trocknen der grossen Holzquerschnitte zeitintensiv ist. Die gründliche Trocknung des Holzes ist aber zur Vorbeugung gegen übermässiges Schwinden unabdingbar.

Vollholzwände wurden deshalb zunehmend verdrängt und durch Ständerkonstruktionen, die gegebenenfalls mittels geeigneten Holzverschalungen eine Vollholzkonstruktion vortäuschen, ersetzt. Neuerdings erfreuen sich jedoch Vollholzkonstruktionen wieder zunehmender Beliebtheit.

Aus der DE-A- 30 48 359 ist ein Bauelement aus Massivholz zum Aufbau der Wände von Häusern in Blockbauweise bekannt. Das eine Blockbohle bildende Bauelement ist zusammengesetzt aus mehreren übereinander liegend angeordneten Balken. Diese sind auf den einander benachbarten Seiten entgegengesetzt korrespondierend profiliert. Die Rippen und Einschnitte der Profilierung verlaufen längs des Balkens. Die benachbarten Balken sind im Bereich der Profilierung durch Leimen unlösbar miteinander verbunden. Die Einschnitte und Rippen sind konisch zulaufend ausgebildet und haben zum Zweck, die verleimte Oberfläche möglichst gross zu erhalten.

Es wurden verschiedentlich Brettstapel-Bauelemente vorgeschlagen, die dem Bedürfnis nach Vollholzkonstruktionen entgegenkommen.

So ist aus der US-A-3,172,170 ein Brettstapel-Bauelement bekannt, bei dem die benachbarten Bretter mit Nut und Kamm ineinander passen und durch leichte, händische Pressung in einander eingreifen. In einzelnen Brettern sind Einschnitte vorhanden. Im Brettstapel sind Bohrungen ausgebildet, die dank den den Bohrer führenden Einschnitten bei jedem Brett neu zentriert werden. In diese Bohrungen sind Aluminium-Gewindestangen eingedreht, welche sich beim Eindrehen mit der Hälfte der Gewindetiefe in der Wandung der Bohrung eingraben.

Aus der DE-U-296 14 258 ist ein Brettstapel-Bauelement für Decken oder Wandkonstruktionen bekannt. Die Brettlamellen sind zwischen zwei achssenkrecht zu den Brettlamellen angeordneten Rahmenhölzern angeordnet. In den Brettlamellen sind Nuten und Federn ausgebildet, die im Brettstapel ineinander greifen. Die Federn sind satteldachartig geneigt, und die Flanken der Nuten entsprechend angepasst. Die Oberflächen der Federn können im sägerauen Zustand verbleiben. Da die Federn der Brettlamellen in die Nuten der benachbarten Brettlamellen eingreifen und mit ihren Stirnflächen nicht an diesen anliegen, ist es nicht erforderlich, die Oberfläche der Federn zu bearbeiten.

Aus der AT-B-410 335 ist ein weiteres Brettstapel-Bauelement bekannt. Bei diesem Plattenelement greifen die einzelnen Bretter mit Profilen auf deren Breitseiten ineinander ein. In einem Winkel von wenigstens 15 Grad zur Oberflächenebene der Breitseiten der Bretter ist der Stapel von Holzdübeln durchdrungen.

Aus der DE-A-26 26 530 ist ein Montageabstandhalter für mit Nut- und FederVerbindungen zusammengefügtes Gut, das einer Ausdehnung erliegt. Jeweils am Boden der Nut sind Montageabstandshalter angeordnet, die schwächer als das zusammenzufügende Gut ausgebildet sind. Bei einer Ausdehnung des Gutes geben diese unter eigener Deformation nach, so dass eine gefährliche Verspannung im zusammengefügten Gut vermieden wird. Bei einem Brett ist dieser Montageabstandhalter dargestellt als eine aus dem Holz herausgearbeitete Rippe am Grund der Nut.

Die bekannten Bauelementen weisen jeweils wenigstens einen der nachfolgenden Nachteile auf:
Sie sind aus relativ grossen, annähernd quadratischen Querschnitten hergestellt, die lange Trocknungszeiten benötigen und starke Verwindungskräfte entwickeln können.
Sie sind nicht geeignet für die Herstellung von Vollholzwänden und -Decken, sondern lediglich für eine Bekleidungsfläche.
Ein Schwinden des Holzes führt zu einer relevanten Verkleinerung der Wand- oder Deckenabmessung quer zur Faserrichtung.
Ein Schwinden des Holzes führt zu einer wesentlichen Verminderung der Winddichtigkeit der Wand/Decke.

Es ist Aufgabe der vorliegenden Erfindung, ein Bauelement vorzuschlagen, mit welchem Vollholzwände gebaut werden können. Das Bauelement soll leicht zu trocknen sein. Weiterführende Aufgaben sind, eine aus solchen Bauelementen hergestellte Wand oder eine aus solchen Bauelementen hergestellte Deckenplatte zu schaffen,
- die winddicht ausgebildet ist,
- welche Wand in Faserquerrichtung tragend ausgebildet werden kann,
- bei welcher Wand oder Decke ein Schwinden oder Quellen des Holzes quer zur Faserrichtung sich nicht negativ auf die Gesamtabmessungen oder die Winddichtigkeit auswirkt.
- welche einen guten Wärmedämmwert aufweisen kann.

Diese Aufgabe der Erfindung wird gelöst durch ein Holzbrett mit einer ersten Schmalseite und, in einem der Brettbreite entsprechenden Abstand dazu, einer zweiten Schmalseite, einer ersten Breitseite und, in einem der Brettstärke entsprechenden Abstand dazu, einer zweiten Breitseite. Dieses Brett besitzt eine erste in Faser- und Längsrichtung des Holzbrettes gerichtete Profilierung mit wenigstens zwei Nuten und zwei Kämmen in der ersten Breitseite und eine dazu parallele zweite Profilierung mit wenigstens zwei Nuten und zwei Kämmen in der zweiten Breitseite. Jeweils eine Nut einer bestimmten Breite in einer Breitseite liegt einem auf der gegenüberliegenden Breitseite ausgebildet Kamm derselben Breite gegenüber. In Abweichung davon könnte jede Nute gegenüber einer Nut ausgebildet sein, was jedoch im Stapel eine Anordnung der Bretter mit abwechselnder Ausrichtung der asymmetrischen Profilierung erfordern würde.

Solche Bretter können zu Wänden gestapelt werden. Die Mehrzahl von Nuten und Kämmen, die bei einer solchen Wand in den Fugen zwischen zwei benachbarten Brettern ineinander greifen, gewährleisten eine gute Winddichtigkeit der Wand. Die Winddichtigkeit beim Schwinden und Quellen des Holzes ist sichergestellt, weil die Seitenflächen von Nuten und Kämmen nicht satteldachartig, sondern praktisch parallel und senkrecht zur Breitseite des Brettes ausgebildet sind.

Eine geringe Konizität der Nutseitenwände und Kammseitenwände wird jedoch für die freigestellte Flankenreibung beim Fräskopf zur Herstellung der Nuten und Kämme in Kauf genommen. Eine für die Freistellung der Flankenreibung ausreichende Konizität liegt in einem Bereich von 1/100 mm pro mm Flankenbreite. Bei den 4.5 mm tiefen Nuten ist die Freistellung im Bereich von 5/100 mm ausgebildet. Eine ebensolche geringe Abweichung von der Senkrechten zur Breitseite ist bei den Kämmen ausgebildet. Diese für den Holzbau minimale Abweichung dient lediglich der Standzeitverlängerung der Bearbeitungswerkzeuge. Diese Freistellung der Flankenreibung hat praktisch keinen Einfluss auf die Passgenauigkeit von Nut und Kamm, da Holz in diesen Grössenordungen mit der Luftfeuchte schwindet und quillt, und beim Ineinander fügen in dieser Grössenordnung zusammenpressbar ist.

Die Anordnung des Brettes mit der Schmalseite an der Oberfläche der Wand oder der Decke ist durch die Profilierung gegeben und hat den Vorteil, dass grosse Wanddicken mit entsprechend hoher Wärmedämmfähigkeit aus leicht trockenbaren Hölzern ohne Verleimung zusammengesetzt werden können.

Diese brettförmigen Hölzer eignen sich nicht nur vorzüglich zum Trocknen. Durch die geringe Brettdicke kann auch die Holzqualität durch Ausschneiden von Abschnitten mit minderer Holzqualität sehr hoch gehalten werden. Sie sind ohne zusätzliche Massnahmen winddicht. Die Innenseite und die Aussenseite der Wand sind durch die Schmalseiten der Bretter gestaltet und damit, bei einer hohen Oberflächenqualität dieser Bretter, ohne zusätzliche Massnahmen bereits fertig.

Bei einem solchen Holzbrett ist vorzugsweise am Grund wenigstens einer Nut oder auf der Oberfläche eines Kammes ein Distanzteil vorhanden, mit welchem eine Fugenweite einer Fuge zwischen zwei über Nuten und Kämme zusammengefügten Holzbrettern definiert ist. Als Distanzteile kommen z.B. in Frage: Überstehendes Holz in Form von Rippen, Noppen oder dergleichen, eingeschlagene oder eingeschossene Stifte aus Metall, Kunststoff oder Holz, Köpfe an solchen Stiften. Solche Distanzteile erlauben die Positionierung von zwei Brettern aufeinander mit definiertem Fugenabstand. Beim Quellen eines so beabstandet gefügten Stapels werden zuerst die Distanzteile ins benachbarte Holz eingepresst, bevor die Ausdehnung des einen Bretts sich auf die Position des benachbarten Bretts auswirken kann. Daher ist der Einfluss von Wassereinwirkung auf das Holz vorerst lokal begrenzt.

Damit die von einem auf das benachbarte Holzbrett übertragbare Kraft limitiert ist, weist das Distanzteil vorteilhaft eine Anschlagfläche zum Anschlagen mit dem angrenzenden Holzbrett auf, welche maximal 2,5% der Breitseite des Holzbrettes bedeckt, vorzugsweise maximal 1,2%, besonders bevorzugt maximal 0,8%. Selbst die geringste Ausdehnung der Anschlagfläche reicht aus, um beim Zusammenstellen einer Wand oder einer Deckenplatte aus solchen Holzbrettern den gewünschten Abstand im Fugenbereich zu gewährleisten. Bei Harthölzern ist der Flächenanteil der Distanzteile noch bedeutend geringer wählbar.

Damit die Distanzteile nicht schon beim Zusammenstellen der Wand oder der Deckenplatte zerdrückt oder ins benachbarte Holz eingedrückt werden und die gewünschte Fugenweite gewährleistet bleibt, bedeckt die Anschlagfläche wenigstens 0,1% der Breitseite des Holzbrettes, vorzugsweise wenigstens 0,2%, besonders bevorzugst wenigstens 0,4%.

Die Distanzteile sind zweckmässigerweise in regelmässigen Abständen über die Breite des Holzbrettes verteilt vorhanden, um eine über die Breite des Brettes gleichmässig ausgebildete Fuge zu erreichen. Ebenso sind die Distanzteile zweckmässigerweise in regelmässigen Abständen über die Brettlänge des Holzbrettes verteilt vorhanden, um in Längsrichtung das Fugenbild konstant zu halten.

Solche Distanzteil sind am kostengünstigsten und mit geringem Aufwand als Distanzrippen auszubilden, die beim Ausfräsen der Nuten am Grund einer Nut stehen gelassen werden. Zweckmässigerweise ist jeweils wenigstens eine Distanzrippe am Grund wenigstens zweier Nuten, vorzugsweise jeder Nut auf einer Breitseite ausgebildet.

Eine solche Distanzrippe weist vorteilhaft in Richtung der Brettstärke eine Höhe zwischen einem Zwanzigstel und einem Achtzigstel der Brettstärke, vorzugsweise zwischen einem Dreissigstel und einem Siebzigstel der Brettstärke, besonders bevorzugt zwischen einem Vierzigstel und einem Sechzigstel der Brettstärke auf. Je nach Holzart ist mit anderen Ausdehnungsmassen zu rechnen, welche aber immer in einem Verhältnis zur Brettstärke zu bemessen sind.

Wenn auch die Distanzrippe quer zur Nutrichtung ausgebildet werden kann, so wird doch bevorzugt, wen die Distanzrippe in Längsrichtung ausgebildet ist und eine Breite in Richtung der Brettbreite zwischen 3 und 0.7 mm aufweist. Diese Breite liegt vorzugsweise in einem engeren Bereich zwischen 2 und 0,7 mm, besonders bevorzugt zwischen 1,3 und 0,9 mm.

Um die gewünschten Flächenanteile der Distanzteile zu erreichen und die Distanzrippe mit einer vernünftigen Breite ausbilden zu können, ist die Distanzrippe vorzugsweise in Längsrichtung partiell abgetragen. Es bleiben daher lediglich kurze Rippenstücke stehen, die einen Drittel oder weniger der Länge der Distanzrippe ausmachen.

Diese Distanzteile sind deshalb von besonderer Bedeutung, weil sie erlauben, die einzelnen Bretter eines Stapels in definiertem Abstand zueinander anzuordnen. So angeordnete Bretter können an dieser Stelle fixiert werden. Dadurch können die einzelnen Bretter unabhängig von einander schwinden und quellen.

Wenn auch nebeneinander liegende Nuten und Kämme unterschiedliche Masse aufweisen könnten, so wird bevorzugt, wenn sie dieselben Masse aufweisen. Die Nuten sind aus dem rohen Brett geschnitten, so dass die Kämme einstückig mit dem Brett zwischen den Nuten stehen. Durch die Eingriffnahme von Kämmen in Nuten benachbarter Bretter ist die Bauhöhe des einzelnen Brettes kleiner als die für die Herstellung des Brettes notwendige Brettstärke. Eine gleiche Höhe von Nuten und Kämmen ist deshalb zweckmässig, weil dadurch die rohe Brettstärke in einem günstigen Verhältnis zu Bauhöhe des Brettes steht. Die Nuttiefe (und entsprechend die Kammhöhe) ist vorteilhaft ca. 7 mm hoch. Sie kann in einem Bereich von 4 bis 20 mm variiert werden, bevorzugte Nuttiefen liegen in einem Bereich von 5 bis 12 mm.

Eine bevorzugte Nutbreite (und entsprechend der Abstand zwischen den Nuten, bzw. die Kammbreite) liegt bei ca. 20 mm. Die Nuten und Kämme können in einem Bereich zwischen 10 und 80 mm variiert werden. Ein bevorzugter Bereich für die Nutbreite liegt zwischen 15 und 30 mm.

In wenigstens einzelnen, vorzugsweise allen Kämmen, die dazu bestimmt sind, in Nuten einzugreifen, ist mit Vorteil in Faserrichtung ein Einschnitt senkrecht zur Breitseite ausgebildet. Dieser Einschnitt hat mehrere Vorteile. Zum Einen bildet er eine Schranke für die Wärmeleitung senkrecht zum Einschnitt, das heisst zwischen den Oberflächen einer Wand aus solchen Brettern. Zum Andern bildet er einen Hohlraum zwischen zwei dicht aneinander anliegenden Seitenflächen von ineinander steckenden Nuten und Kämmen benachbarter Bretter. Die Abfolge von dichtenden Flächen und Hohlräumen im Bereich der Fugen gewährt eine hohe Winddichtigkeit der Wand, da der Druck der durch eine erste dichtende Stelle eindringenden Luft dank dem Volumen des Hohlraums im Hohlraum stark absinkt. Ein so geteilter Kamm besitzt eine gewisse Federwirkung, die sich positiv auswirkt beim Einführen des Kammes in die Nut und für die Winddichtheit bei sich verziehendem Holz.

Unter Inkaufnahme von Nachteilen können die Einschnitte auch in den Nuten ausgebildet sein. Jedenfalls ist von Vorteil, wenn die Einschnitte, welche in Faserrichtung und senkrecht zur Breitseite ausgebildet sind, abwechselnd nebeneinander von den beiden gegenüberliegenden Breitseiten her und tiefer als die halbe Brettstärke ausgebildet sind. Durch die dadurch erreichte Überlappung der Einschnitte ist die Wärmetransportstrecke durch das massive Holz hindurch von der einen zur anderen Oberfläche der Wand, bzw. von der einen zur anderen Schmalseite des Brettes deutlich länger als die Wanddicke, bzw. die Breite des Brettes. Die für die Wärmedämmung wirksame Wandstärke ist daher grösser als der Platzbedarf der Wand. Dies ist umso mehr zutreffend, wenn die Einschnitte in den Kämmen ausgebildet sind, da dann auch in den Fugen die Einschnitte überlappen. Die Einschnitte überlappen vorzugsweise um ca. 10 mm. Es soll jedenfalls noch ein um die Einschnitte mäandernder Holzquerschnitt von durchwegs ca. 16 bis 20 mm bestehen bleiben, damit die einzelnen Bretter eine genügende Stabilität aufweisen und gegen eine Rissbildung in Fasserrichtung genügend Widerstand leisten.

Für Aussenwände geeignete Bretter können vorteilhaft eine an einer Schmalseite ausgebildete Wetternase aufweisen. Diese Wetternase ist mit einer auf der Breitseite ausgebildeten Tropfkante versehen, welche bei einem liegenden Brett ein Zurückziehen von auf die Schmalseite aufgebrachtem Wasser an die unten liegende Breitseite verhindert. Der Vorsprung der Wetternase beträgt etwa 20 mm, 7 mm von der unteren äusseren Kante des Brettes ist auf der Brettunterseite ein 6 mm breiter Einschnitt ausgebildet, der die für Hinterschneidungen von Tropfkanten übliche viertelrunde Form aufweisen kann. Die Wetternase ist auf ihrer Oberseite abgeschrägt. Bei einer Wand aus solchen Brettern bilden die Tropfnasen horizontale Bänder, zwischen denen Schattenfugen liegen. Die Breiten in diesem Holzbänder- /Fugenbild kann individuell gestaltet werden und sogar in einer einzigen Wand variieren. Es kann auch in einer Wand partiell an geschützten Stellen keine Wetternase vorgesehen sein, an dem Wetter ausgesetzten Stellen hingegen schon.

Vorteilhaft werden die Holzbretter nicht zusammengestossen, bis die Stirnseiten der Kämme am Grund der Nuten anliegen. Zwischen Kämmen und Nuten soll ein Abstand in der Richtung der Wandhöhe und der Brettstärke von ca. 1 mm bleiben, damit die Bretter in Querrichtung zur Faser einzeln schwinden und sich ausdehnen können. Zur Sicherstellung eines einheitlichen Abstands zwischen den Brettern eines Stapels ist bevorzugt in jedem Brett eine Distanzrippe am Grund wenigstens zweier Nuten, vorzugsweise in jeder Nut einer Breitseite ausgebildet. Die Distanzrippen sind vorzugsweise etwa 0,2 mm höher als der schliesslich verbleibende Abstand zwischen den Brettern. Diese Überhöhe der Distanzrippe wird beim Zusammenpressen des Stapels in die Stirnseite des Kammes eingepresst, bzw. durch Verformung der Distanzrippe kompensiert.

Um den Widerstand der Distanzrippen auf die gegebene Holzart und die gegebene Bausituation anzupassen, wird die Distanzrippe vorteilhaft zu einem grossen Teil entfernt und nur als kurze Distanzstücke stehen gelassen. Über den Flächenanteil der Distanzteile oder Distanzrippen kann der Widerstand beim Quellen eines Brettes eingestellt werden.

Über die Breite und Länge der Distanzrippe kann der Druck eingestellt werden, der von einem Brett auf das andere übertragen werden kann. Dieser Druck soll klein sein, damit die Bretter einzeln für sich arbeiten. Die Dimensionsveränderungen eines einzelnen Brettes sollen nach Möglichkeit innerhalb der angrenzenden Fugen aufgenommen werden.

Die Erfindung betrifft auch ein Flächenelement, z.B. ein Wandelement, aus einem insbesondere der Wandhöhe entsprechend hohen Stapel von Holzbrettern. Diese Holzbretter weisen eine erste Schmalseite und, in einem der Brettbreite entsprechenden Abstand dazu, eine zweite Schmalseite, eine erste Breitseite und, in einem der Brettstärke entsprechenden Abstand dazu, eine zweite Breitseite auf. Bei dem so ausgebildeten Wandelement bilden die Schmalseiten der Holzbretter zwei gegenüberliegende Wandoberflächen, und der Stapel ist an mehreren Stellen über die gesamte Wandhöhe senkrecht zu den Breitseiten der Holzbretter von einem Hartholzstab durchdrungen. Anstelle eines Hartholzstabes kann auch ein Gewindestab aus Stahl eingefügt sein, um örtlich z.B. eine Zugkraft aufzunehmen. Bei einem entsprechenden liegenden Element, also z.B. einer Bodenplatte, können die die Bretter durchdringenden Stäbe im Zugbereich der Platte vorteilhaft durch Stahl-Gewindestäbe gebildet werden. Gewindestäbe aus Metall können auch dort eingesetzt werden, wo keine Zugkräfte aufzunehmen sind.

Die Hartholzstäbe oder die Gewindestäbe sind vorteilhaft nicht nur zur Verdübelung der verschiedenen Brettlagen miteinander vorgesehen, sondern sind lastabtragend, d.h. zur Aufnahme von Druckkräften, die von der Wand getragen werden sollen. Falls die einzelnen Holzbretter mit einem Ausdehnungsspielraum zueinander angeordnet sind und gesondert mit den Hartholzstäben verbunden sind, so gewährleisten sie ausserdem, dass ein Schwinden und Quellen der Holzbretter im Bereich des Ausdehnungsspielraums aufgenommen wird und daher die Wandhöhe unbeeinflusst lässt.

Ein solches Wandelement ist vorzugsweise aus einem Stapel der oben beschriebenen Holzbretter gebildet.

Die Erfindung betrifft ein Flächenelement, also beispielsweise wieder ein Wandelement aus einem der Wandhöhe entsprechend hohen Stapel von Holzbrettern. Diese Holzbretter weisen wiederum eine erste Schmalseite und, in einem der Brettbreite entsprechenden Abstand dazu, eine zweite Schmalseite, eine erste Breitseite und, in einem der Brettstärke entsprechenden Abstand dazu, eine zweite Breitseite auf. Bei einem solchen Wandelement bilden ebenfalls wieder die Schmalseiten der Holzbretter zwei gegenüberliegende Wandoberflächen. Die Holzbretter sind mit einer ersten in Faser- und Längsrichtung des Holzbrettes gerichteten Profilierung mit Nuten und Kämmen in der ersten Breitseite und mit einer dazu parallelen zweiten Profilierung mit Nuten und Kämmen in der zweiten Breitseite versehen. Diese beiden Profilierungen sind derart ausgebildet, dass jeweils eine Nut einer bestimmten Breite in einer Breitseite einem auf der gegenüberliegenden Breitseite ausgebildet Kamm derselben Breite gegenüber liegt. Dadurch sind gleiche Bretter übereinander stapelbar und greifen mit den Kämmen ihrer Unterseiten in die Nuten auf der Oberseite des darunter liegenden Brettes, und mit den Kämmen an der Oberseite in die Nuten auf der Unterseite des darüber angeordneten Brettes. Dank dieser Verzahnung ist nicht nur eine Winddichtigkeit ohne Verleimung und ohne Pressband zwischen den Brettern gewährleistet, sondern sie möglicht auch, dass die Dimensionsveränderungen einzelner Brettlagen infolge von Witterungseinflüssen, Wärmeausdehnung und Alterung innerhalb der nicht verleimten Fugen aufgenommen werden und daher nicht auf benachbarte Bretter übertragen werden. Dadurch kumulieren sich diese Dimensionsveränderungen quer zur Faser, die nicht vernachlässigbar sind, nicht über die gesamte Elementhöhe, sondern haben auf die Dimensionen des Element praktisch keinen Einfluss.

Entsprechendes gilt auch für eine Wand aus nebeneinander stehenden Brettlamellen. In Richtung der Breite der Wand ist eine Quellen und Schwinden eines Brettes dank des Spielraums im Bereich der Fugen möglich, ohne sich auf die benachbarten Bretter auszuwirken.

In Deckenplatten ist diese Wirkung der im Bereich der Fugen ausgebildeten oder angeordneten Distanzteile besonders vorteilhaft. Decken sind besonders anfällig auf Quellen, z.B. bei Wasserschäden, da Flüssigkeiten oft nicht ablaufen und gegebenenfalls über längere Zeit in die Deckenplatte eindringen können.

Die Dichtung zwischen zwei Holzbrettern erfolgt zweckmässigerweise an den Seitenflächen der Nuten und Kämme. Zwei übereinander angeordnete Holzbretter liegen an den parallel zu den Schmalseiten gerichteten Seitenflächen von Nut und Kamm jeweils gegeneinander dichtend aneinander an. Da diese Seitenflächen nicht konisch, sondern parallel zu der Setzrichtung und den Oberflächen des Wandelements verlaufen, bleibt die Dichtigkeit auch dann erhalten, wenn die Brettstärke schwindet.

Die zur Brettbreitseite senkrecht stehenden Nutseitenflächen und Kammseitenflächen haben auch bei Deckenplatten den Vorteil erhöhter Brandsicherheit, erhöhter Schalldichtheit und erhöhter Luftdichtheit. Sie wirken sich zudem positiv auf die Statik der Deckenplatte aus, weil sie einen statisch wirksamen Verbund zwischen zwei benachbarten Brettern herstellen.

Zwischen den parallel zu den Breitseiten der Holzbretter gerichteten Stirnseiten ineinander steckender Nuten und Kämme ist zweckmässigerweise ein Hohlraum vorhanden, der ein Quellen der einzelnen Bretter in Stapelrichtung erlaubt.

Ein solches Wandelement oder Bodenplattenelement ist zweckmässigerweise aus Holzbrettern gebildet, wie sie oben beschrieben wurden und weist daher die oben beschriebenen Vorteile auf.

Der Stapel von Brettern ist, um die Wand tragfähig zu machen und zu stabilisieren, zweckmässigerweise an mehreren Stellen über die gesamte Wandhöhe senkrecht zu den Breitseiten der Holzbretter von einem Hartholzstab oder einem Stahl-Gewindestab durchdrungen. Diese Hartholzstäbe sind in einer vorteilhaften Ausführungsform lastabtragend ausgebildet, und die einzelnen Holzbretter sind mit einem Ausdehnungsspielraum zueinander gesondert mit den Hartholzstäben verbunden. Dadurch kann ein Schwinden und Quellen der Holzbretter im Bereich des Ausdehnungsspielraums aufgenommen werden und lässt daher die Wandhöhe bzw. die Elementlänge in Stapelrichtung unbeeinflusst.

Das oberste Holzbrett und das unterste Holzbrett des Stapels sind in einer Wand, in welcher die Holzstäbe in ihrer Längsrichtung Druckkräfte aufnehmen müssen, mit Vorteil mit dem Hartholzdübel verleimt, um eine ausgezeichnete Krafteinleitung in den Stab zu gewährleisten. Die Hartholzdübel können auch über ihre gesamte Länge mit den Brettern verleimt werden. Vorteilhaft wird ein schäumender Leim verwendet, damit die Übereinstimmung von Hartholzdübel und Bohrung weniger exakt sein muss.

Es ist zu bemerken, dass diese Belastbarkeit der Hartholzstäbe nicht durch deren Knicklänge bestimmt ist, sondern im Wesentlichen durch deren Querschnittfläche. Die tatsächlich entscheidende Knicklänge ist weit grösser als der Querschnitt der Stäbe annehmen liesse. Durch die Versteifung der Stäbe mit den Holzbrettern, welche wiederum gegenseitig miteinander verzahnt sind, ergibt sich eine Knicklänge für die 2 bis 4 cm dicken Rundstäbe aus beispielsweise Eiche oder Buche (gedämpft) von bis zu über 4 Meter Länge. Die Tragfestigkeit der Wand kann durch die Dichte der Anordnung solcher Hartholzstäbe bestimmt werden.

Zur Herstellung eines Wandelements mit Brettern und Hartholzdübeln werden die Holzbretter durchbohrt. Die Bretter können auf wandhohe Hartholzstangen aufgesteckt werden. Zweckmässigerweise werden jedoch die Hartholzdübel in die Bohrungen eingeschoben. Es wird jedes Holzbrett gesondert mit den Hartholzstangen verbunden, z.B. verleimt.

Die Verbindung zwischen Hartholzstangen und Brett kann auch durch einen Feuchtigkeitsausgleich zwischen den Holzbrettern und den Hartholzstangen hergestellt. Dieser Feuchtigkeitsausgleich führt zu einem Quellen der auf eine extrem niedrige Holzfeuchte getrockneten Stangen. Da die Stangen satt in eine durch die Holzbretter hindurchreichende Bohrung passen, entsteht mit dem Quellen der Hartholzstäbe eine ausreichende Verbindung, die gewährleistet, dass die Bretter an der ursprünglichen Stelle am Stab verbleiben.

Die Bohrung wird zweckmässigerweise durch den gesamten Stapel von Holzbrettern hindurch ausgeführt, damit die Bohrungen benachbarter Bretter exakt miteinander fluchten.

Beim Bohren werden die Holzspäne zweckmässigerweise durch einen hohlen Bohrerschaft aus dem Bohrloch gefördert. Dies geschieht vorteilhaft, indem die Holzspäne abgesaugt werden. In einem bevorzugten Herstellungsverfahren wird Pressluft durch einen ersten Hohlraum im Bohrerschaft geführt und werden die Späne durch einen zweiten Hohlraum im Bohrerschaft aus dem Bohrloch gefördert. Dabei muss der Bohrerschaft rohrförmig ausgebildet sein, damit weder die Druckluft durch die Hohlräume im Brettstapel entweichen noch durch diese Hohlräume Luft angesaugt wird.

Ein zum Durchbohren von Holzbrettstapeln geeigneter Bohrer besitzt einen Bohrkopf und einem langen, röhrenartigen Bohrerschaft mit lediglich geringfügig kleinerem Durchmesser als der Bohrkopf. Der hohle Bohrerschaft füllt das Bohrloch weitgehend aus. Vorteilhaft erstreckt sich durch den Bohrerschaft ein erster längsgerichteter Hohlraum vom hinteren Ende des Bohrerschafts zum Bohrkopf der beim Bohrkopf. Öffnungen im Bohrkopf verbinden diesen Hohlraum mit dem Bohrloch. Am hinteren Ende ist der Hohlraum mit einer Überdruckquelle verbunden oder verbindbar. Zudem erstreckt sich durch den Bohrerschaft ein zweiter längsgerichteter Hohlraum vom hinteren Ende des Bohrerschafts zum Bohrkopf. Dieser weist beim Bohrkopf vor jeder Schneide eine Öffnung auf und ist am hinteren Ende mit einer Unterdruckquelle verbunden oder verbindbar.

Eine massive Holzwand aus einem Stapel von horizontal geschichteten Hölzern, mit wärmedämmenden Luftkammern im Innern der Wand, ist dadurch von herkömmlichen Konstruktionen zu unterscheiden, dass die Hölzer liegende Bretter sind, deren Schmalseiten die Oberflächen der Wand bilden. Die Bretter weisen zudem von beiden Breitseiten her Einschnitte auf, die nebeneinander abwechseln von der einen und von der andern Breiteseite her tiefer ausgebildet sind als die halbe Brettstärke. Eine solche Holzwand hat einen sehr hohen Wärmedämmwert, da der Wärmetransport im Holz um die Einschnitte herum erfolgen muss und daher einen weit längeren Weg zurücklegen muss als durch den Abstand der beiden Wandoberflächen voneinander vorgegeben ist.

Nebeneinander ausgebildete Einschnitte überschneiden einander vorteilhaft sowohl im Innern der Bretter als auch im Bereich der Fugen zwischen den Brettern, so dass sich eine Normale zur Oberfläche an jeder Stelle der Holzwand zwingend durch mehrere Einschnitte hindurch erstreckt. Dies kann im Bereich der Fuge zwischen den Brettern zweckmässigerweise dadurch erreicht werden, dass mehrere Einschnitte beidseitig des Brettes in Kämmen ausgebildet sind, welche Kämme in Eingriff mit entsprechenden Nuten zwischen eingeschnittenen Kämmen im benachbarten Brett sind.

Die Erfindung wird im Folgenden anhand von schematische Skizzen im Detail erläutert:
- Fig. 1: zeigt einen Querschnitt durch ein erfindungsgemässes Holzbrett,
- Fig. 2: zeigt einen Querschnitt einer Variante eines solchen Holzbretts,
- Fig. 3: zeigt einen Vertikalschnitt durch ein Flächenelement hergestellt aus einem Stapel Bretter und einen Ausschnitt aus einer Ansicht des selben Flächenelements,
- Fig. 4: zeigt einen Querschnitt durch ein erfindungsgemässes Brett mit Hartholzstäben darin und eine Draufsicht auf das mit den Hartholzstäben durchdrungene Brett,
- Fig. 5: zeigt einen Querschnitt durch ein Holzbrett mit drei Kämmen auf der oberen Breitseite,
- Fig. 6: zeigt einen Querschnitt durch einen Brettstapel mit Einschnitten in den Fugen und mit auf einer Schmalseite profilierten Brettern,
- Fig. 7: zeigt einen Ausschnitt eines Querschnitts durch ein Brett mit profilierter Schmalseite,
- Fig. 8: zeigt schematisch ein Werkzeug zum Profilieren von Holzbrettern und Holzbretter mit unterschiedlichen Brettstärken,
- Fig. 9: zeigt einen Brettstapel mit einer Profilierung für eine Lehmputz,
- Fig. 10: zeigt einen Querschnitt durch einen Brettstapel einer Deckenplatte,
- Fig. 11: zeigt einen Querschnitt durch einen Brettstapel einer Deckenplatte mit akustisch wirksamer Profilierung,
- Fig. 12: zeigt eine Ansicht einer Vollholzwand mit fachwerkartig eingelassenen Dübeln,
- Fig. 13: zeigt eine perspektivische Skizze eines Bohrkopfes eines Tiefenlochbohrers zum Durchbohren eines Bretterstapels gemäss Figur 3,
- Fig. 14: zeigt eine zweite perspektivische Skizze des Bohrkopfes,
- Fig. 15: zeigt eine Seitenansicht des Bohrkopfes,
- Fig. 16: zeigt einen Querschnitt durch den Bohrerschaft des Tiefenlochbohrers,
- Fig. 17: zeigt einen zweiten Querschnitt durch den Bohrerschaft des Tiefenlochbohrers.

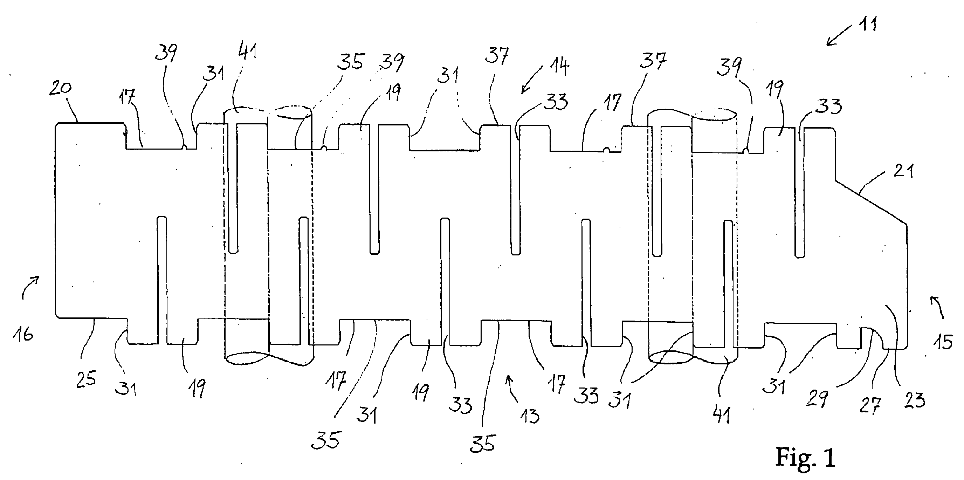

Das in Figur 1 dargestellte bevorzugte Brett 11 ist mit der unteren Breitseite 13 auf die obere Breitseite 14 eines zweiten Bretts 11 bis zur Höhe einer Wand eines Gebäudes stapelbar. Es besitzt eine äussere Schmalseite 15 und eine innere Schmalseite 16, welche unterschiedlich ausgestaltet sind. Das Brett 11 ist insgesamt 60 mm stark. In beiden Breitseiten 13,14 sind Nuten 17 ausgefräst, zwischen denen Kämme 19 stehen geblieben sind.

Diese Ausfräsungen bilden auf der oberen Breitseite 14 fünf Nuten 17 zwischen sechs Kämmen, wobei ein innerster Kamm 20 fluchtend mit der inneren Schmalseite 16 ausgebildet ist. Ausserhalb des äussersten Kammes ist eine Ausnehmung 21 ausgefräst, die die Ausbildung einer Wetternase 23 in der äusseren Oberfläche einer Wand aus solchen Brettern 11 erlaubt.

Die Ausfräsungen bilden auf der unteren Breitseite 13 eine randständige Ausnehmung 25, die an die innere Schmalseite 16 angrenzt, und fünf Nuten. Zwischen diesen Ausfräsungen bleiben fünf Kämme stehen. Angrenzend an die äussere Schmalseite 15 ist in der Wetternase 23 eine Tropfkante 27 ausgebildet. Die Tropfkante ist in der Form eines Kammes ausgebildet, besitzt jedoch eine Hinterscheidung 29, die ein Abtropfen von an der Tropfkante 27 hängendem Wasser sicherstellt. Die Wetternase übernimmt zudem die Funktion eines Kammes 19, so dass ein in die angrenzende Nut 17 eingeführter Kamm zwischen dem an die Nut angrenzenden Kamm und der inneren Seitenfläche 31 der Wetternase 23 eingeklemmt ist.

Die Nuten und Kämme sind in einem Raster von 20 mm angeordnet. Jede Nut und jeder Kamm sind 20 mm breit. Ebenso wie der innerste Kamm 20 und die innerste Nut 25 sind auch die Wetternase 23 und die Ausnehmung 21 für die Wetternase 20 mm breit. Die Seitenflächen 31 der Kämme 19, bzw. der Nuten 17 sind senkrecht zur Breitseite 13,14 des Brettes 11 ausgebildet. Sie sind 7 mm hoch, so dass die Schmalseiten 15,16 des Brettes 11 noch 53 mm hoch sind. Die gesamte Breite des Brettes ist 240 mm. Schmalere und breitere Bretter besitzen weniger bzw. mehr Nuten und Kämme. Es können jedoch auch Hohlräume für das Führen von Leitungen innerhalb der Vollholzwand vorgesehen sein. Die Nuten 17 und Kämme 19 müssen daher die Breitseiten nicht gänzlich ausfüllen, sondern können auch lediglich einen Teilbereich davon bedecken.

Die Kämme 19 und Nuten 17 sind in Faserlängsrichtung des Holzes ausgebildet. In dieser Faserrichtung kann das Brett praktisch beliebige Längen auf weisen. Sowohl in Längsrichtung als auch in der Breite kann das Brett aus mehreren Stücken verleimt sein.

Die Kämme 19 sind alle, bis auf den innersten Kamm 20 und die Wetternase 23, durch einen Einschnitt 33 zweigeteilt. Dadurch sind sie ein wenig nachgebend bezüglich deren Breite und können so besser in die Nuten eingesteckt werden. Zum besseren Einführen in die Nuten sind die Kämme zudem angefast. Die Einschnitte 33 sind bei einem 60 mm dicken Brett 35 mm tief, so dass sie einander 10 mm überlappen. Dadurch ist der kürzeste Weg der Wärme durch das Holz von der inneren Schmalseite 16 zu äusseren Schmalseite 15 um einige Zentimeter länger als das Brett 11 breit ist.

Zudem bilden die Einschnitte Hohlräume zwischen den dichtenden Seitenflächen 33. Durch die Dichtstellen zwischen den Seitenflächen eindringende Luft gelangt in diesen Hohlraum und verliert dadurch an Druck. Dank einer mehrfachen Widerholung von Dichtstellen und Hohlräumen für die Expansion von eindringender Luft ist eine sehr gute Winddichtigkeit einer aus solchen Brettern gebauten Wand erreicht.

Dank dem die Einschnitte in den Kämmen ausgebildet sind, ist die gegenseitige Überlappung der Einschnitte auch im Bereich der Fugen zwischen zwei ineinander gesteckten Brettern gegeben.

Der zwischen den Einschnitten und der äusseren Profilierung verbleibende, mäandernde Querschnitt des Holzes ist bei einem solchen Brett noch etwa 18 mm stark. Der Wärmetransfer pro etwa 54 mm Bauhöhe der gestapelten Brettlage durch eine solche 24 cm starke Wand kann daher verglichen werden mit dem Wärmetransfer in der Richtung der Breite durch ein 18 mm starkes Brett von gut 30 cm Breite. Jedenfalls ist der wärmetransportierende Querschnitt der Holzwand dank diesen Einschnitten auf etwa einen Drittel reduziert und dafür die Länge des Transportwegs um einige Zentimeter verlängert. Es können daher ohne zusätzliche Wärmedämmschichten vorzusehen bereits bei geringer Wandstärke sehr gute Wärmedämmwerte (u-Werte) der Wand erreicht werden. Zudem ist eine atmungsaktive Wand aus Vollholz geschaffen, die einen ausgezeichneten Feuchtigkeitsausgleich und einen sehr guten Wärmeausgleich gewährleistet. Zur Zeit bestehen noch keine genauen Rechenmodelle, die der bauphysikalischen Eigenheit einer solchen Wand gerecht werden.

Da die Nuten 17 auf der unteren Breitseite 13 des Brettes 11 mit den Kämmen 19 auf der oberen Breitseite 14 des Brettes 11 übereinstimmen bezüglich Breite und Abstand von den Schmalseiten 15,16 des Brettes, passen diese beim Stapeln identisch ausgebildeter Bretter 11 ineinander. Damit diese Nuten und Kämme jedoch nicht bis zum Anschlag der Stirnfläche 37 des Kammes 19 am Grund 35 der Nut 17 ineinander gesteckt werden können, sind am Nutgrund 35 einiger Nuten Distanzrippen 39 ausgebildet. Diese Distanzrippen müssen nicht über die gesamte Länge des Brettes durchgehend ausgebildet sein. Sie können auch unterbrochen sein, oder durch die Köpfe von in den Grund 35 eingeschlagenen Distanznägeln gebildet sein. Diese Distanzrippen 39 halten benachbarte Bretter in einem Fugenabstand von ca. 0,5 bis 1,5, vorzugsweise 1 mm. Die Distanzrippen müssen neben den Einschnitten 33 zu liegen kommen, damit sie an den Stirnflächen 37 der Kämme 19 anliegen. In der Figur 1 sind sie neben einer Mittellinie der Nut angeordnet, da die Einschnitte 33 auf einer Mittellinie der Kämme ausgebildet sind. Es könnten die Einschnitte jedoch auch nicht mittig in den Kämmen ausgebildet sein. Die Distanzrippen können in den Nuten beider Breitseiten oder aber auch nur in den Nuten einer Breitseite ausgebildet sein. Sie können in allen oder auch lediglich in einzelnen Nuten ausgebildet sein.

In der Figur 1 sind zudem zwei Teilbereiche von Hartholzstäben 41 dargestellt, die das Brett 11 durchdringen. Der axiale Abstand der beiden Hartholzstäbe 41 entspricht der halben Brettbreite. Die Bohrungen für die beiden Hartholzstäbe sind daher mit einem axialen Abstand zur Schmalseite des Brettes von einem Viertel der Brettbreite ausgeführt worden.

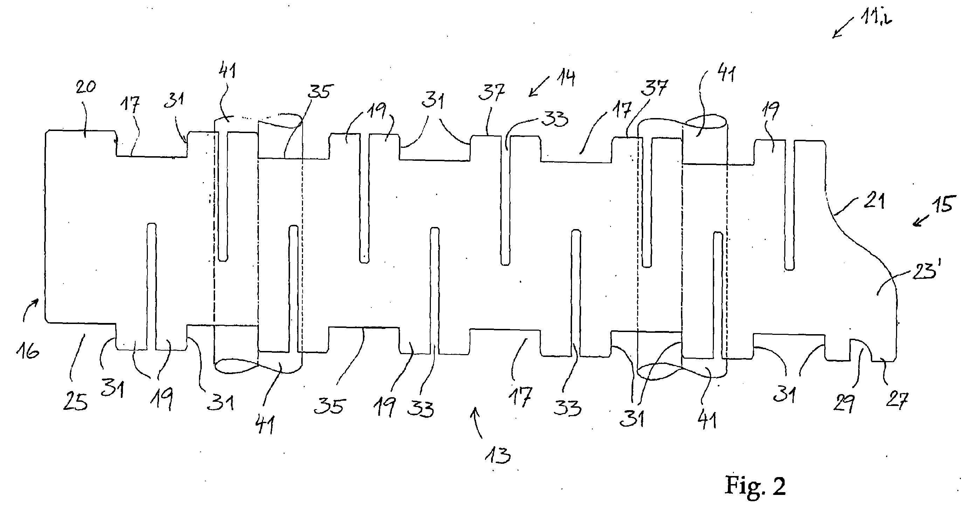

Das in Figur 2 dargestellt Brett 11.i unterscheidet sich vom oben beschriebenen Brett 11 lediglich dadurch, dass die Wetternase 23.i anders geformt ist, und das keine Distanzrippen ausgebildet sind.

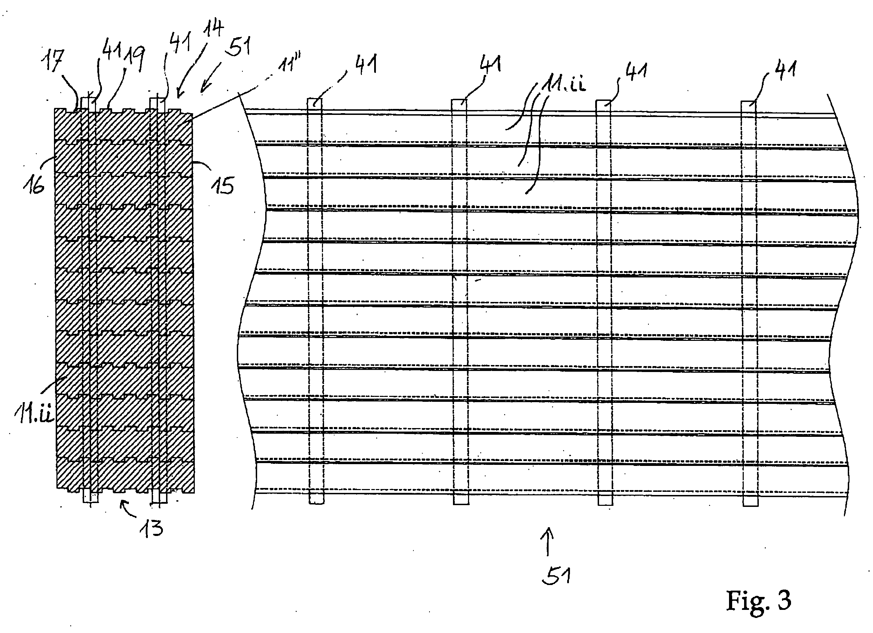

In Figur 3 ist eine Vollholzwand bzw. ein Flächenelement 51 dargestellt, die oder das aus Brettern 11.ii hergestellt ist. Die Bretten 11.ii unterscheiden sich von den oben beschriebenen Brettern dadurch, dass sie keine Einschnitte 33 und keine Wetternase 23 aufweisen. Im äusserten Kamm auf der Unterseite jedes Bretts der Wand ist keine Hinterschneidung 29 ausgebildet. Die äusserste Ausfräsung auf der Oberseite der Bretter ist als gewöhnliche Nut ausgeführt. Solche Flächenelemente 51 sind für nicht wetterexponierte Stellen geeignet, oder können für diesen Zweck mit einem Wetterschutz bekleidet werden. Sie sind jedoch vielmehr geeignet für Innenwände, oder bei liegender Anordnung als Zwischendecken. In ebensolcher Weise können aber auch die Bretter 11 und 11.i gestapelt werden. Ein solcher Stapel bildet dann eine Holzwand, die direkt dem Wetter ausgesetzt werden kann. Jede Fuge zwischen zwei Brettern 11 ist geschützt durch eine darüber hinaus vorstehende und über die Fuge hinunterreichende Wetternase 23.

Nicht dargestellt ist in der Figur 3 ein oberstes Kraft einleitendes Brett, und ein unterstes Kraft einleitendes Brett. Die Hartholzstäbe 41 stehen über die Breitseiten des obersten und untersten Brettes des dargestellte Bretterstapels hinaus. Über diese vorstehenden Enden der Stäbe 41 wird jeweils das Kraft einleitende Brett gesteckt und mit den Enden der Stäbe 41 verleimt. Dies gewährleistet, dass die Krafteinleitung über einen Kegelquerschnitt gelingt. Bei geringeren Druckkräften kann diese Kraft auch direkt auf die Stirnseite des Stabes 41 geleitet werden. Kraft einleitende Bretter können bei Bedarf aus Hartholz hergestellt sein.

Der dargestellte Bretterstapel ist lediglich 12 Bretterlagen hoch. Solche Vollholzwände 51 können aber auch raumhoch ausgebildet sein und z.B. 40 oder 45 Brettlagen umfassen. Sie können auch noch höher sein und bis zu 80 oder 100 über einander gestapelte Bretter umfassen, ohne dazwischen, z.B. durch eine Balkenlage einer Geschossdecke, ausgesteift sein zu müssen. Die 20, 25, 30 oder 40 mm dicken Rundholzstäbe 41 können auch auf sehr grosse Höhen Lasten abtragen ohne auszuknicken. Die Brettlagen 11 aus Nadelholz schützen die dünnen Druck übertragenden Laubholzstäbe 41 vor einem solchen Ausknicken.

Die Tragfähigkeit der Wand kann durch die Anzahl der tragenden Stäbe 41 pro Laufmeter Wand 51 geregelt werden. Im dargestellten Beispiel sind die Stäbe 41 jeweils paarweise in einem Abstand von etwa 25 cm vorgesehen. Dieser Abstand kann jedoch variiert werden.

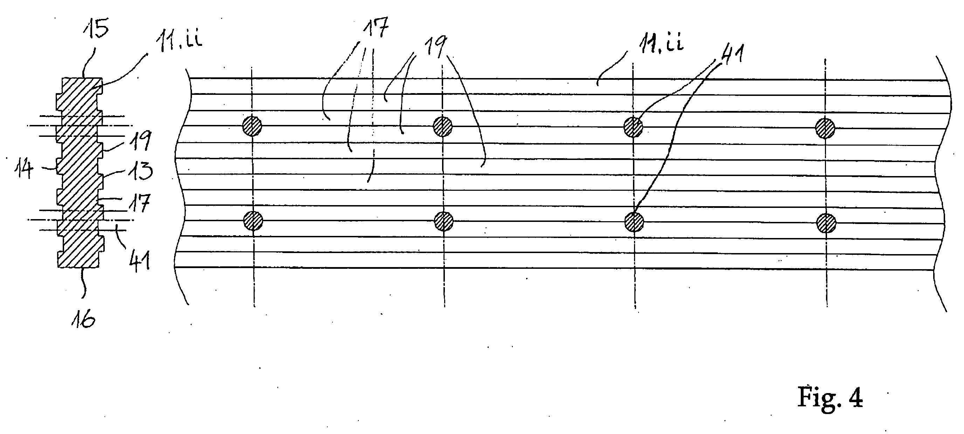

Die selbe Anordnung von Hartholzstäben 41 ist in Figur 4 als Draufsicht auf ein einzelnes Brett 11.ii dargestellt.

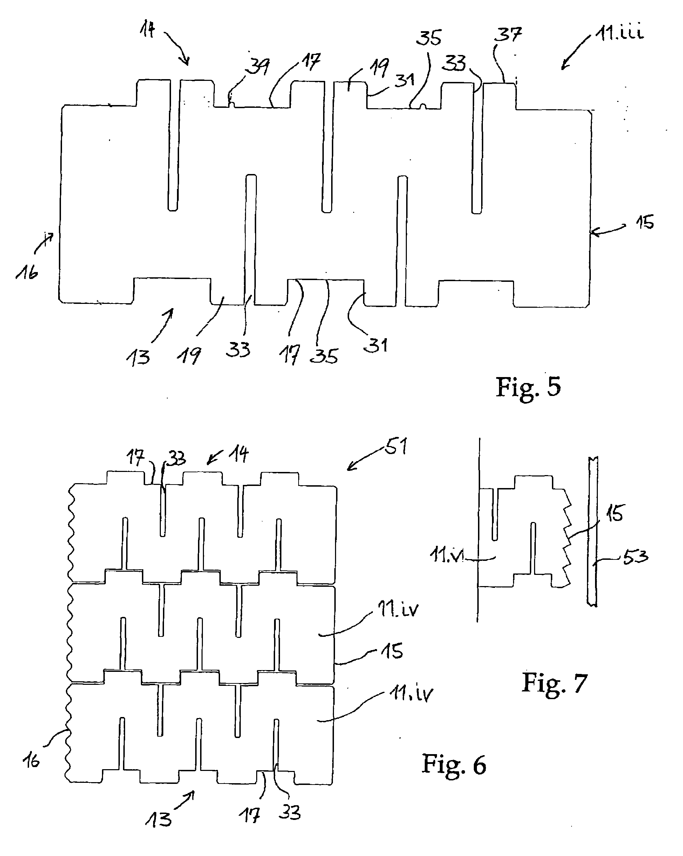

In Figur 5 ist ein Holzbrett 11.iii dargestellt, das schmaler ist als das Holzbrett 11 gemäss Figur 1, Distanzrippen 39 in den Nuten 17 der oberen Breitseite 14 und Einschnitte 33 in den Kämmen 19 aufweist, aber keine Wetternase 23 besitzt. Ein solches Brett 11.iii ist geeignet für weniger stark isolierende Wände. Eine Wand aus solchen Brettern 11.iii kann auch (insbesondere auf der Innenseite) mit einer zusätzlichen Wärmedämmung oder mit einer äusseren Verglasung für passive Sonnenenergienutzung versehen sein (vergleiche Figur 7).

Der Brettstapel 51 gemäss Figur 6 ist aus Brettern 11.iv hergestellt, bei welchen die Einschnitte 33 am Grund der Nuten 17 ausgebildet sind. Die eine Schmalseite 16 ist mit einer in Brettlängsrichtung ausgebildeten Profilierung versehen. Die Wellenform der Profilierung besitzt eine Wellenlänge in Richtung der Brettstärke, die auf die Bauhöhe des Brettes abgestimmt ist. Die Wellenform wird daher über die Fugen hinweg fortgeführt. Die Bretter 11.iv besitzen keine Distanznoppen. Die Fugenweite kann beim Stapeln der Bretter z.B. durch Distanzhölzchen definiert werden, die nach erfolgter Verbindung zwischen den Brettern und einem die Brettposition sichernden Querholz oder Dübel entfernt werden können. Ein solcher Brettstapel kann z.B. mit stehenden Brettern eine Wand bilden, an deren oberen und unteren Rand, und eventuell auch dazwischen, an der Schmalseite 15 anliegende Querhölzer angeordnet sind, die den Brettstapel versteifen.

Die in Figur 7 dargestellte Profilierung ist in Längsrichtung des Brettes 11.v ausgebildet und besitzt in einem Winkel von 30 Grad zur Ausrichtung der Schmalseite 15 "Kollektorflächen" zur Aufnahme von Sonnenstrahlungsenergie. Zur Verhinderung von übermässigen Abstrahlungs- und vor allem Konvektionsverlusten ist vor einem Brettstapel aus solchen Brettern 11.v eine Glasscheibe 53 zu montieren. Eine solche Wandkonstruktion kann, trotz relativ geringem Wärmedämmkoeffizient durchaus eine überraschende und sogar positive Energiebilanz aufweisen.

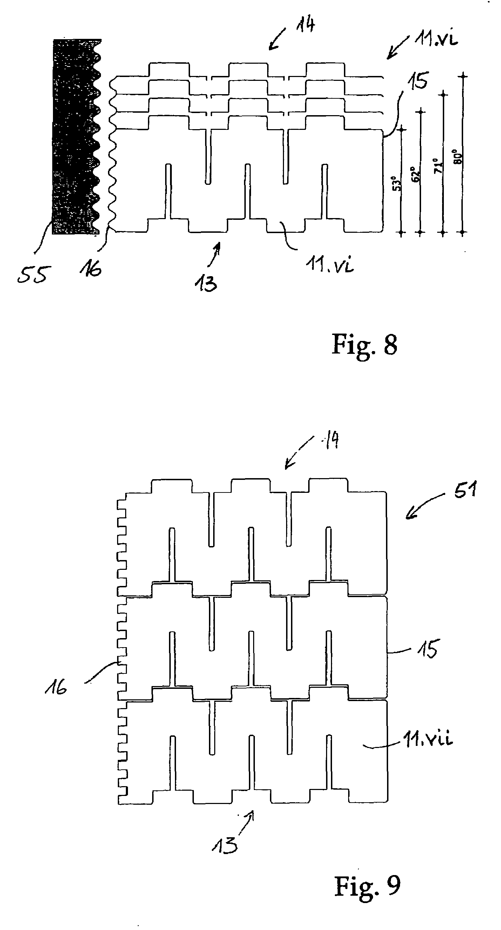

Derartige Profilierungen sind in einer Vielzahl von Formen möglich. In Figur 8 ist schematisch dargestellt, wie diese Profilierungen hergestellt werden können. Das Brett 11.vi wird mit einem Fräskopf 55 profiliert. Dabei wird vorzugsweise darauf geachtet, dass die Teilung der Profilierung auf die Bauhöhe des Brettes angepasst ist. In Figur 8 werden verschiedene Brettstärken von 53, 62, 71 und 80 mm vorgeschlagen. Die Bauhöhen dieser Bretter im Stapel sind entsprechend mit 54, 63, 72 und 81 mm anzugeben. Als Teilung für die Profilierung ergibt sich in Figur 8 daher 9 mm. In Figur 7 ist sie etwa 11 mm. Eine solche Teilung bedingt natürlich eine andere Reihe von Brettstärke.

Die Tiefe der Profilierung ist ebenso wählbar wie die Winkel und die Formen der Profilierungen. Während in Figur 6 die Wellenflanken in einem Winkel von 60 Grad zueinander stehen, stehen die Wellenflanken in Figur 8 in einem Winkel von 90 Grad zueinander. In dem in Figur 9 dargestellten Brett 11.vii ist ebenfalls eine 9 mm Teilung der Profilierung eingefräst. Diese Profilierung ist indes kantig ausgebildet und besitzt parallele Flanken. Sie ist insbesondere geeignet zur direkten Aufnahme eine Lehmputzes.

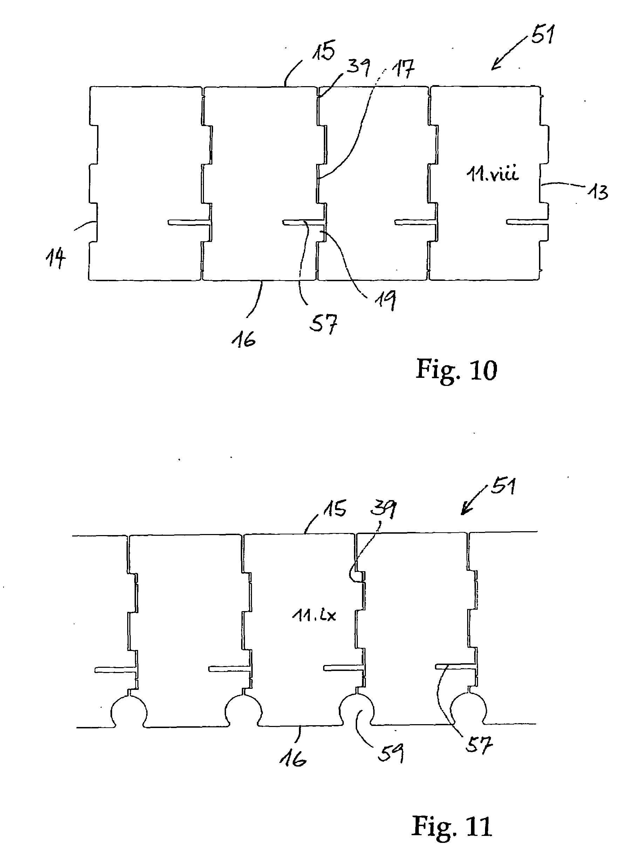

In den Figuren 10 und 11 sind Querschnitte aus Deckenplatten dargestellt. Da bei Deckenplatte die Tragfähigkeit der Bretter und des Stapels relevant ist, hingegen die Wärmedämmung untergeordnet ist, sind in den Brettern keine Einschnitte 33 vorgesehen. Die dargestellte Einfräsung 57 weist lediglich eine geringe Tiefe auf und dient der Führung eines Bohrers beim Durchbohren des Stapels. Deckenplatten werden in der Regel durchbohrt und mit Hartholzstäben durchdrungen.

Auffällig an den Brettern 11.viii und 11.ix ist auch die geringer Höhe von Kämmen 19 und Nuten 17. Die Distanzrippen 39 sind nahe des Rands des Brettes 11.viii oder aber in den mittlern Nuten 17 des Brettes 11.ix angeordnet. Die Verzahnung benachbarter Bretter wirkt sich positiv auf die Steifigkeit, die Luftdichtheit, die Feuerbeständigkeit und die Schalldämmung einer solchen Deckenplatte aus. Sie ist indes nicht zwingend erforderlich. In einer einfachsten Ausführung können sägerohe Bretter gestapelt werden und mit Hartholzstäben durchdrungen werden. Die Problematik des Durchbohrens eines solchen Brettstapels bleibt die selbe wie bei den raffiniert ausgebildeten Brettern 11 bis 11ix, da bei sägerohen Brettern ebenfalls Luft zwischen den Brettern entweichen oder angesaugt werden kann.

Das in Figur 11 dargestellte Holzbrett 11.ix ist im Bereich der Fugen auf der Schmalseite 16 derart profiliert, dass im Brettstapel ein von der Schmalseite her hinterschnittener, kanalartiger Raum 59 entsteht. Eine solche Profilierung kann aus optischen oder auch akustischen Gründen vorgesehen werden.

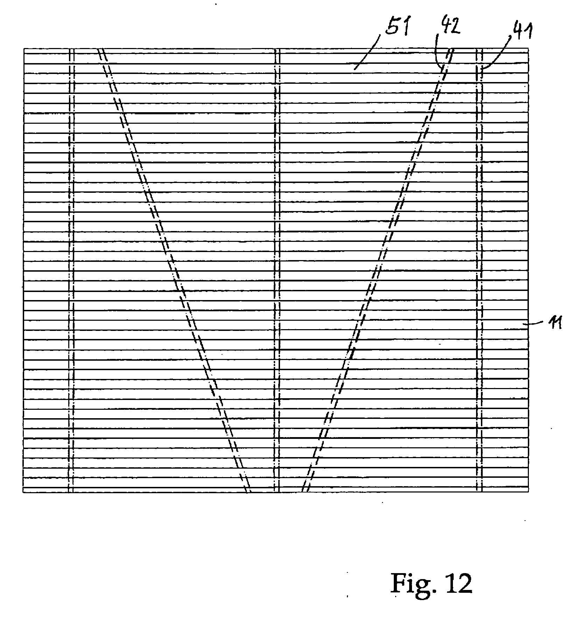

In Figur 12 ist eine raumhohe Wand 51 dargestellt. Diese Wand ist an mehreren Stellen senkrecht zu den Fugen des Brettstapels durchbohrt. In diese Bohrlöcher sind Hartholzdübel 41 eingeschoben. Diese können tragend ausgebildet sein. Damit Schubkräfte auf die Wand nicht lediglich über die Reibung zwischen den Seitenflächen der Nuten und Kämme und über die Scherkräfte in den Hartholzstäben abgetragen werden können, sind auch schräg verlaufende Dübel 42 in entsprechenden Bohrungen vorhanden. Diese schräg verlaufenden Dübel 42 sind weniger auf die Aufnahme von vertikalen Lasten ausgerichtet, sondern zur Aufnahme von Zug oder Druckkräften, die aus einer auf die Wand wirkenden Schubkraft resultieren. Die schräg verlaufenden Dübel 42, die vertikal verlaufenden lastabtragenden Dübel 41 und die horizontal verlaufenden Bretter 11 wirken fachwerkartig zusammen. Da die Dübel 41,42 in unterschiedlichen Ebenen der Wand angeordnet sein können, könnten sie in einer Ansicht der Wand auch überschneidend angeordnet sein.

Zum Bohren der Löcher in die Bretterstapel, in welche Löcher die Hartholzstäbe 41 eingeführt werden können, werden spezielle Tiefenlochbohrer 53 benötigt. Bei herkömmlichem Tiefenlochbohren in volles Material werden gegebenenfalls die Späne mit einem durch den hohlen Schaft oder neben dem Schaft eingepressten flüssigen Kühlmittel aus dem Loch herausgefördert. Dieses Verfahren zum Entnehmen der Späne aus dem Bohrloch kann bei einem erfindungsgemässen Stapel aus Holzbrettern nicht angewendet werden, da zwischen den Brettern 11 und gegebenenfalls mit den Schlitzen 33 Hohlräume vorhanden sind, in welche das Kühlmittel und Späne eindringen können und durch welche Hohlräume der Druck des Kühlmittels teilweise entweicht. Daher können die Späne mit bekannten Verfahren nicht aus dem zu durchbohrenden Bretterstapel hinausgefördert werden.

Es wird deshalb vorgeschlagen, sowohl mit Überdruck Luft auf die Stirnseite des Bohrerkopfes zu bringen, als auch mit einem Unterdruck die Späne zusammen mit der Luft hinter der Schneide des Bohrkopfes abzusaugen. Es kann dadurch verhindert werden, dass die Zwischenräume bei den Fugen zwischen den Brettern mit zerspantem Material gefühlt werden und die eingeblasene Kühl- und Förderluft durch diese Zwischenräume entweicht und die Späne wegen des verminderten Druckes und Spülvolumens gar nicht mehr heraus zu fördern vermag.

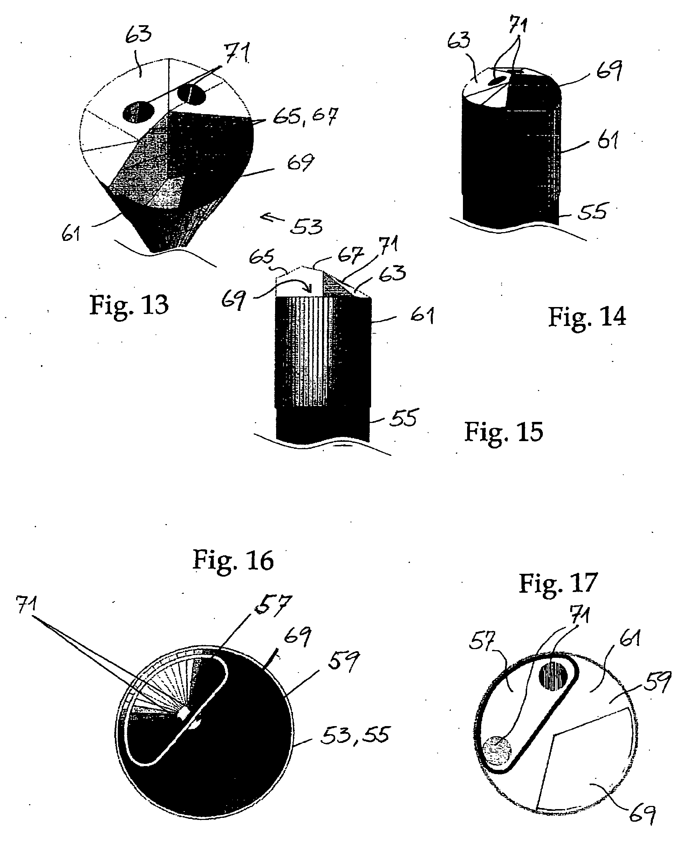

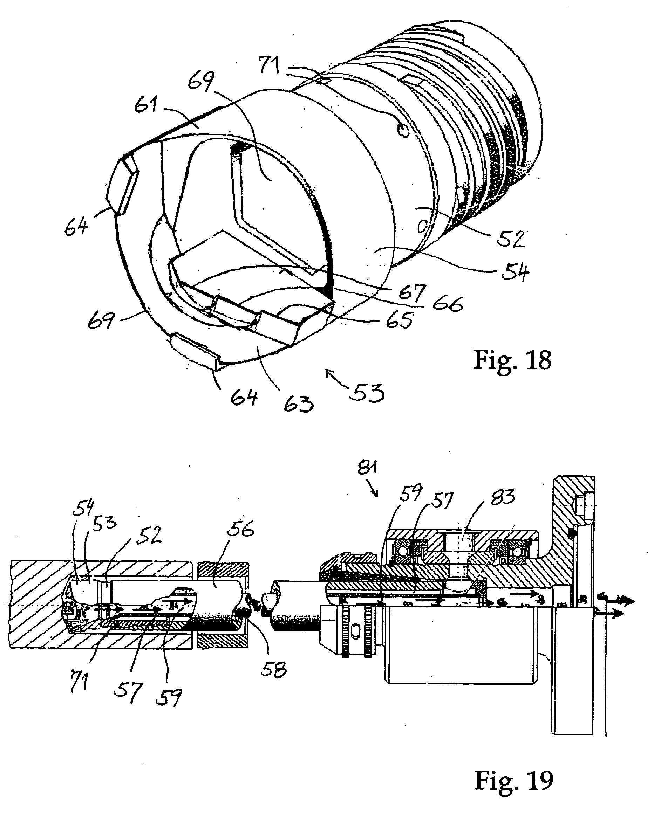

Zu diesem Zweck ist ein Tiefenlochbohrer 53 gemäss den Figuren 13 bis 17, bzw. gemäss den Figuren 18 und 19 geschaffen, der im Innern seines Hohlschaftes 55 durch eine in Längsrichtung gerichtete inner Wandung in zwei Abteilungen unterteilt ist. Eine kleinere Abteilung bildet einen Zuluftkanal 57 für Pressluft, eine grössere Abteilung bildet einen Absaugkanal 59 für die Späne.

Der Bohrkopf 61 des Tiefenlochbohrers 53 gemäss Figuren 13 bis 17 besitzt einen gegenüber dem Schaftdurchmesser vergrösserten Aussendurchmesser. An der Spitze dieses grösseren Rohrabschnitts, der den Bohrkopf bildet, ist eine Bohrstirne 63 ausgebildet, an der wenigstens eine Schneide 65,67 ausgebildet ist. Die Bohrstirne 63 verschliesst das Rohr des Bohrerschafts und des Bohrkopfes zu etwa zwei Dritteln. Ein restlicher Drittel des Rohrinnenquerschnittes ist daher zum Bohrgrund hin offen. Diese Öffnung 69, das Spanmaul, mündet in den grösseren Absaugkanal 59.

Schaftseitig des geschlossenen Teils des Bohrkopfes 61, das ist hinter der Bohrstirne 63, schliesst der Zuluftkanal 57 dicht an den Bohrkopf an. In der Bohrstirne 63 ist eine Düse 71, im vorliegenden Beispiel sind es zwei Düsen 71, ausgebildet, durch welche die Druckluft zum Bohrlochgrund hin austreten kann. Die Bohrstirne 63 ist gewendelt zu der Schneide 65,67 hin ansteigend ausgebildet, so dass sich hinter der Schneide ein Spalt bilden kann, in welchem die Pressluft zwischen die Bohrstirne 63 und den Bohrlochgrund eingepresst werden kann. Dadurch gelangt die Pressluft in Bohrrichtung vor die sich beim Bohren bildenden Späne und fördert diese rückwärts durch die Absaugöffnung 69 in den Absaugkanal 59 im Bohrerschaft 55 und durch diesen aus dem Bohrer und dem Bohrloch hinaus.

Die Pressluft kann so gesteuert werden, dass beim Durchbohren eines Fugenbereichs der Druck der Pressluft reduziert oder die Pressluftzufuhr abgestellt wird. Sobald der Bohrkopf die Fugen durchbohrt hat, können mit der Pressluftzufuhr wieder die Späne ausgeblasen werden. Zur Unterstützung des Ausblasens und damit eine solche Unterbrechung der Pressluftzufuhr nicht unumgänglich ist, ist der Absaugkanal an eine (nicht dargestellte) Unterdruckquelle angeschlossen. Zwischen der Unterdruckquelle und einem Anschlussstück an den Schaft muss eine Filterung geschehen, um die Späne von der Luft abzuscheiden.

Die Abteilungen im Bohrerschaft können, wie in Figuren 16 und 17 dargestellt, hergestellt werden, indem ein separates Pressluftrohr in den Hohlschaft eingeführt wird. In Figur 16 ist dieses Pressluftrohr ringsum mit Abstand zur Innenwandung des Hohlschaftes 55 angeordnet. In Figur 17 liegt das Pressluftrohr dicht an der Innenwandung des Hohlschaftes 55 an.

Bei dem in Figuren 18 und 19 dargestellten Bohrer 53 sind im Gegensatz zum oben beschriebenen Bohrer die Düsen 71 hinter dem Bohrkopf in der Wandung des Bohrerschaftes 55 angeordnet. Das Bohrerschaft 55 ist doppelwandig ausgebildet. Die innere Wandung umfängt den Absaugkanal 59. Zwischen den beiden Wandungen ist der Druckluftkanal 57 ausgebildet. Die innere Wandung ist im Bohrkopf gegenüber der äusseren Wandung des Bohrkopfes abgedichtet, so dass die Druckluft durch die Düsen 71 in das Bohrloch treten muss.

Der Bohrkopf ist mit einer dreistufigen Schneide 65,66,67 ausgerüstet. Diese ist aus Hartmetall gefertigt und in den Bohrkopf eingelegt. Dieses Hartmetallschneide übersteht den Umfang der Bohrkopfaussenwandung um einen kleinen Betrag. Um einen entsprechenden Betrag auf die Aussenseite der Aussenwandung aufgedoppelt sind zwei Führungsleisten 64. Diese halten den Bohrkopf zentrisch in seinem Bohrloch und gleiten beim Drehen des Bohrers an der Wandung des Bohrloches entlang. Diese Führungsleisten sind aus Hartmetall gefertigt und hartbeschichtet, um den Verschleiss zu minimieren. Diese Führungsleisten sichern im Bereich zwischen den Führungsleisten einen Abstand zwischen Bohrkopf und Bohrloch, so dass die hinter der Bohrkrone austretende Druckluft um die Bohrkrone herum in das Spanmaul gelangen kann, wo sie zusammen mit den Spänen abgesaugt wird. Damit die Späne nicht zu grosse Abmessungen aufweisen ist die Klinge gestuft. Dank den Stufen 65,66,67 der Klinge wird der Span in kleinen Abmessungen aus dem Holz getrennt und neigt daher weniger dazu, das Rohr zu verstopfen.

In Figur 19 ist die gesamte Bohreranordnung (ohne Druckluftquelle und ohne Unterdruckquelle) dargestellt. Der Bohrkopf 53 besitzt eine Bohrkrone 54 und einen Bohrkopfhals 52. Ein Bohrerrohr 56 ist auf den Bohrkopfhals aufgeschraubt. Ein Innenrohr 58 ist konzentrisch im Bohrerrohr 56 angeordnet und dichtet luftdicht an einem Anschlag im Bohrkopf 53 ab. Das Bohrerrohr 56 über deckt mit einem Flansch die Düsen 71 derart, dass zwischen Bohrkopfhals 52 und Bohrerrohr 56 ein Luftspalt offen bleibt. Durch diesen Luftspalt gelangt die aus den Düsen 71 austretende Luft in den Bereich des Bohrkopfhalses 52, um die Bohrkrone herum und zum Spanmaul 69.

Antriebseitig ist eine Druckluftquelle an das Bohrfutter 81 angeschlossen, welches einen Druckluftanschluss 83 aufweist, der in der Art eines für Tiefbohren üblichen Anschlusses für das flüssige Kühl- und Schmiermittel ausgebildet ist. Das Innenrohr 58 trennt den Unterdruckbereich im Saugkanal 59 von Überdruckbereich im Druckluftkanal 57. Der Saugkanal im Innenrohr ist an eine nicht dargestellte Unterdruckquelle angeschlossen.

Mit solchen Bohrern lassen sich praktisch beliebig lange Bohrlöcher durch Brettstapel bohren. Zur Führung des Bohrers kann in jedem Brett ein Einschnitt 57 vorgesehen sein. Dies verhindert ein Annähern des Bohrers an die Oberfläche der Wand oder der Deckenplatte.

## Patentansprüche

1. Holzbrett (11) mit einer ersten Schmalseite (15) und, in einem der Brettbreite entsprechenden Abstand dazu, einer zweiten Schmalseite (16), einer ersten Breitseite (13) und, in einem der Brettstärke entsprechenden Abstand dazu, einer zweiten Breitseite (14), mit in Faser- und Längsrichtung des Holzbrettes (11) gerichteten, einander entsprechenden Profilierungen in der ersten Breitseite (13) und in der zweiten Breitseite (14), **dadurch gekennzeichnet, dass** als Profilierung wenigstens zwei Nuten (17) und wenigstens zwei Kämme (19) in der ersten Breitseite (13) und diesen entsprechende Nuten (17) und Kämme (19) in der zweiten Breitseite (14) ausgebildet sind, wobei jeweils eine Nut (17) einer bestimmten Breite in einer Breitseite (13 oder 14) einem auf der gegenüberliegenden Breitseite (14 oder 13) ausgebildeten Kamm (19) derselben Breite gegenüber liegt, und dass die Nuten und Kämme zueinander parallele Seitenflächen (31) aufweisen.

2. Holzbrett nach Anspruch 1, **dadurch gekennzeichnet, dass** am Grund wenigstens einer Nut (17) oder auf der Oberfläche (37) eines Kammes ein Distanzteil (39) vorhanden ist, mit welchem eine Fugenweite einer Fuge zwischen zwei über Nuten (17) und Kämme (19) zusammengefügten Holzbrettern (11) definiert ist.

3. Holzbrett nach Anspruch 2, **dadurch gekennzeichnet, dass** das Distanzteil (39) eine Anschlagfläche zum Anschlagen mit einem angrenzenden Holzbrett (11) aufweist, welche maximal 2,5% der Breitseite des Holzbrettes bedeckt, vorzugsweise maximal 1,2%, besonders bevorzugt maximal 0,8%.

4. Holzbrett nach Anspruch 2 oder 3, **dadurch gekennzeichnet, dass** die Anschlagfläche wenigstens 0,1% der Breitseite des Holzbrettes (11) bedeckt, vorzugsweise wenigstens 0,2%, besonders bevorzugst wenigstens 0,4%.

5. Holzbrett nach einem der Ansprüche 2 bis 4, **dadurch gekennzeichnet, dass** in regelmässigen Abständen über die Breite (14) des Holzbrettes (11) verteilt Distanzteile (39) vorhanden sind.

6. Holzbrett nach einem der Ansprüche 2 bis 5, **dadurch gekennzeichnet, dass** in regelmässigen Abständen über die Brettlänge des Holzbrettes (11) verteilt Distanzteile (39) vorhanden sind.

7. Holzbrett nach einem der Ansprüche 2 bis 6, **dadurch gekennzeichnet, dass** das Distanzteil ausgebildet ist als jeweils wenigstens eine Distanzrippe (39) am Grund (35) wenigstens zweier Nuten (17), vorzugsweise jeder Nut (17) auf einer Breitseite (14).

8. Holzbrett nach Anspruch 7, **dadurch gekennzeichnet, dass** die Distanzrippe (39) in Richtung der Brettstärke eine Höhe zwischen einem Zwanzigstel und einem Achtzigstel der Brettstärke, vorzugsweise zwischen einem Dreissigstel und einem Siebzigstel der Brettstärke, besonders bevorzugt zwischen einem Vierzigstel und einem Sechzigstel der Brettstärke aufweist.

9. Holzbrett nach Anspruch 7 oder 8, **dadurch gekennzeichnet, dass** die Distanzrippe (39) eine Breite in Richtung der Brettbreite zwischen 3 und 0.7 mm aufweist, vorzugsweise zwischen 2 und 0,7 mm, besonders bevorzugt zwischen 1,3 und 0,9 mm aufweist.

10. Holzbrett nach einem der Ansprüche 7 bis 9, **dadurch gekennzeichnet, dass** die Distanzrippe in Längsrichtung partiell abgetragen ist.

11. Holzbrett nach einem der vorangehenden Ansprüche, **dadurch gekennzeichnet, dass** nebeneinander liegende Nuten (17) und Kämme (19) dieselben Masse aufweisen.

12. Holzbrett nach einem der vorangehenden Ansprüche, **dadurch gekennzeichnet, dass** in wenigstens einzelnen, vorzugsweise allen Kämmen (19), die dazu bestimmt sind, in Nuten (17) einzugreifen, in Faserrichtung ein Einschnitt (33) ausgebildet ist, der insbesondere senkrecht zur Breitseite (13,14) ausgebildet ist.

13. Holzbrett nach einem der vorangehenden Ansprüche, **gekennzeichnet durch** Einschnitte (33) in Faserrichtung und senkrecht zur Breitseite (13,14), welche abwechselnd nebeneinander von den beiden gegenüberliegenden Breitseiten (13,14) her und tiefer als die halbe Brettstärke ausgebildet sind.

14. Holzbrett nach einem der vorangehenden Ansprüche, **gekennzeichnet durch** eine an einer Schmalseite (15) ausgebildete Wetternase (23) mit einer auf der Breitseite (13) ausgebildeten Tropfkante (27), welche bei einem liegenden Brett (11,11') ein Zurückziehen von auf die Schmalseite (15) aufgebrachtem Wasser an die unten liegende Breitseite (13) verhindert.

15. Wandelement (51) aus einem der Wandhöhe entsprechend hohen Stapel von Holzbrettern (11), welche Holzbretter (11) eine erste Schmalseite (15) und, in einem der Brettbreite entsprechenden Abstand dazu, eine zweite Schmalseite (16), eine erste Breitseite (13) und, in einem der Brettstärke entsprechenden Abstand dazu, eine zweite Breitseite (14) aufweisen, bei welchem Wandelement (51) die Schmalseiten (15,16) der Holzbretter (11) zwei gegenüberliegende Wandoberflächen bilden, und der Stapel an mehreren Stellen über die gesamte Wandhöhe senkrecht zu den Breitseiten (13,14) der Holzbretter (11) von einem Stabelement (41) durchdrungen ist, die Stabelemente (41) lastabtragend sind und die einzelnen Holzbretter (11) mit einem Ausdehnungsspielraum zueinander gesondert mit den Stabelementen (41) verbunden sind, so dass ein Schwinden und Quellen der Holzbretter (11) im Bereich des Ausdehnungsspielraums aufgenommen wird und daher die Wandhöhe unbeeinflusst lässt.

16. Wandelement nach Anspruch 15, **dadurch gekennzeichnet, dass** der Stapel gebildet ist aus Holzbrettern (11) gemäss einem der Ansprüche 1 bis 14.

17. Wandelement nach einem der Ansprüche 15 oder 16, **dadurch gekennzeichnet, dass** das Stabelement ein Hartholzstab (41) ist und zumindest das oberste Holzbrett und das unterste Holzbrett des Stapels mit dem Hartholzstab (41) verleimt ist.

18. Brettstapelelement (51) aus einem Stapel von Holzbrettern (11), welche Holzbretter (11) eine erste Schmalseite (15) und, in einem der Brettbreite entsprechenden Abstand dazu, eine zweite Schmalseite (16), eine erste Breitseite (13) und, in einem der Brettstärke entsprechenden Abstand dazu, eine zweite Breitseite (15) aufweisen, bei welchem Brettstapelelement (51) sämtliche Schmalseiten (15,16) der Holzbretter (11) zwei gegenüberliegende Elementoberflächen bilden, und die Holzbretter (11) mit in Faser- und Längsrichtung des Holzbrettes (11) gerichteten, einander entsprechenden Profilierungen in der ersten Breitseite (13) und der zweiten Breitseite (15) ausgebildet sind, **dadurch gekennzeichnet, dass** als Profilierungen wenigstens zwei Nuten (17) und wenigstens zwei Kämme (19) in der ersten Breitseite (13) vorhanden sind, wobei jeweils eine Nut (17) einer bestimmten Breite in einer Breitseite (13 oder 14) einem auf der gegenüberliegenden Breitseite (14 oder 13) ausgebildet Kamm (19) derselben Breite gegenüber liegt und die Seitenwände der Nuten und Kämme parallel zueinander und zu den aus den Schmalseiten gebildeten Elementoberflächen ausgebildet sind.

19. Brettstapelelement nach Anspruch 18, **dadurch gekennzeichnet, dass** zwei übereinander angeordnete Holzbretter (11) an parallel zu den Schmalseiten (15,16) gerichteten Seitenflächen (31) von Nut (17) und Kamm (19) jeweils gegeneinander dichtend aneinander anliegen.

20. Brettstapelelement nach einem der Ansprüche 18 oder 19, **dadurch gekennzeichnet, dass** zwischen den parallel zu den Breitseiten (13,14) der Holzbretter (11) gerichteten Stirnseiten (37) der in Nuten (17) steckenden Kämme (19) und den Gründen (35) der Nuten (17) ein Hohlraum vorhanden ist.

21. Brettstapelelement nach einem der Ansprüche 18 bis 20, **dadurch gekennzeichnet, dass** das Brettstapelelement (51) aus Holzbrettern (11) gemäss einem der Ansprüche 1 bis 14 gebildet ist.

22. Brettstapelelement nach einem der Ansprüche 18 bis 21, **dadurch gekennzeichnet, dass** der Stapel an mehreren Stellen über die gesamte Stapelhöhe senkrecht zu den Breitseiten (13,14) der Holzbretter (11) von einem durchgehenden Stabelement (41), insbesondere einem Hartholzstab oder einem Gewindestab, durchdrungen ist.

23. Brettstapelelement nach einem der vorangehenden Ansprüche, **dadurch gekennzeichnet, dass** wenigstens eine der Schmalseiten profiliert ist.

24. Brettstapelelement nach Anspruch 23, **dadurch gekennzeichnet, dass** die Profilierung in der Schmalseite geeignet ist zur Aufnahme eines Putzes, insbesondere eines Lehmputzes.

25. Brettstapelelement nach einem der vorangehenden Ansprüche, **dadurch gekennzeichnet, dass** wenigstens eine der Schmalseiten und die angrenzenden Breitseiten derart profiliert sind, dass durch die Profilierung in Fugenbereich Hohlräume (59) geschaffen sind.

26. Brettstapelelement nach Anspruch 25, **dadurch gekennzeichnet, dass** die Profilierung die Schmalseite (16) hinterschneidend ausgebildet ist.

27. Verfahren zur Herstellung eines Brettstapelelements (51), **dadurch gekennzeichnet, dass** Bretter mit einem durch kleinflächige Abstandteile definierten Fugenabstand zueinander gestapelt werden, der Brettstapel durchbohrt und stapelhohe Stabelemente (41) durch die Bohrungen hindurchgeführt werden, und dass jedes Holzbrett (11) gesondert mit den Stabelement (41) verbunden, insbesondere mit einem Hartholzstab (41) verklebt wird.

28. Verfahren nach Anspruch 27, **dadurch gekennzeichnet, dass** beim Bohren die Holzspäne durch einen hohlen Bohrerschaft (55) aus dem Bohrloch gefördert werden.

29. Verfahren nach Anspruch 28, **dadurch gekennzeichnet, dass** die Holzspäne durch eine Kombination aus Über- und Unterdruck aus dem Bohrloch abgeführt werden.

30. Verfahren nach einem der vorangehenden Ansprüche, **dadurch gekennzeichnet, dass** Pressluft durch einen ersten Hohlraum (57) im Bohrerschaft (55) geführt wird und die Späne durch einen zweiten Hohlraum (59) im Bohrerschaft aus dem Bohrloch gefördert werden.

31. Verfahren zum Bohren eine Loches durch einen Brettstapel hindurch, **dadurch gekennzeichnet, dass** das Loch mit einem Bohrer mit rohrformigem Bohrerschaft gebohrt wird und dabei Luft durch den Bohrkopf ausgeblasen wird und Luft zusammen mit den beim Bohren entstehenden Spänen durch den Bohrerschaft abgesogen werden.

32. Tiefenlochbohrer (53) zum Durchbohren eines Brettstapels bzw. zum Ausführen des Verfahrens gemäss einem der Ansprüche 27 bis 31, mit einem Bohrkopf (61) und einem langen, rohrförmigen Bohrerschaft (55), welcher Bohrerschaft das Bohrloch weitgehend ausfüllt.

33. Tiefenlochbohrer nach Anspruch 32, **dadurch gekennzeichnet, dass** der Bohrerschaft (55) einen ersten längsgerichteten Hohlraum (57), der sich vom hinteren Ende des Bohrerschafts (55) zum Bohrkopf (61) erstreckt, der auf der Aussenseite des Bohrkopfs wenigstens eine Öffnung (71) aufweist und am hinteren Ende mit einer Überdruckquelle verbunden oder verbindbar ist, und einen zweiten längsgerichteten Hohlraum (59), der sich vom hinteren Ende des Bohrerschafts (55) zum Bohrkopf (61) erstreckt, der hinter der Schneide (65,67) am Bohrkopf (61) wenigstens eine Öffnung (69) aufweist und am hinteren Ende mit einer Unterdruckquelle verbunden oder verbindbar ist.

34. Massive Holzwand (51) aus einem Stapel von horizontal geschichteten Hölzern (11), mit wärmedämmenden Luftkammern (33) im Innern der Wand, **dadurch gekennzeichnet, dass** die Hölzer liegende Bretter (11) sind, deren Schmalseiten (15,16) die Oberflächen der Wand bilden, welche Bretter (11) von beiden Breitseiten (13,14) her Einschnitte (33) aufweisen, die nebeneinander abwechseln von der einen und von der andern Breiteseite (13,14) her tiefer als die halbe Brettstärke ausgebildet sind.

35. Holzwand nach Anspruch 34, **dadurch gekennzeichnet, dass** nebeneinander ausgebildete Einschnitte (33) sowohl im Innern der Bretter (11) als auch im Bereich der Fugen zwischen den Brettern (11) einander überschneiden, so dass sich eine Normale zur Oberfläche der Wand (51) an jeder Stelle der Holzwand (51) zwingend durch mehrere Einschnitte (33) hindurch erstreckt.

36. Holzwand nach Anspruch 35, **dadurch gekennzeichnet, dass** die Überschneidung im Bereich der Fuge zwischen den Brettern (11) **dadurch** erreicht ist, dass mehrere Einschnitte (33) in Kämmen (19) ausgebildet sind, welche Kämme (19) in Eingriff mit entsprechenden Nuten (17) im benachbarten Brett (11) sind.
